# FASCICULE DE BREVET EUROPEEN

(11) **EP 3 451 079 B1**
(45) Date de publication et mention de la délivrance du brevet: **18.11.2020**
(21) Numéro de dépôt: 17189111.2
(22) Date de dépôt: 01.09.2017
(51) Int. Cl.: G04B 37/08

(54) **DISPOSITIF POUR L'ORIENTATION D'UNE SOUPAPE POUR PIÈCE D'HORLOGERIE**
VORRICHTUNG ZUR AUSRICHTUNG EINES VENTILS FÜR EINE UHR
DEVICE FOR ORIENTING A VALVE FOR A TIMEPIECE

(43) Date de publication de la demande: 06.03.2019
(73) Titulaire: Omega SA, 2502 Bienne (CH)
(72) Inventeur: LOETSCHER, Philippe, 2533 Evilard (CH)
(74) Mandataire: ICB SA

(56) Documents cités:
- EP-A1- 2 685 327
- EP-A2- 2 385 432
- CH-A- 472 065

## Description

La présente invention concerne un dispositif pour régler l'orientation d'une soupape d'un dispositif à soupape vissé ou chassé sur une boite de montre et plus particulièrement pour des dispositifs à soupape à hélium automatiques dans lesquels la soupape comporte un motif ou un logo sur leur face d'extrémité et dans lesquels le motif peut être orienté à souhait.

Les dispositifs à soupape à hélium, aussi appelés valves à hélium, sont présents sur certaines montres de plongée pour évacuer l'hélium infiltré dans la boîte de montre lors de plongées dites à saturation où les plongeurs respirent un mélange gazeux contenant de l'hélium et de l'oxygène. Cela leur permet de rester plusieurs jours à l'intérieur d'une cloche ou d'une station sous-marine. Durant ce laps de temps, l'hélium peut s'infiltrer dans la montre. En l'absence d'une telle soupape, la surpression intérieure générée par l'hélium infiltré peut lors de la phase de décompression générer des dégâts à la montre, comme par exemple la perte du verre qui se déchasse ou se brise. Un tel dispositif est par exemple connu du document EP 2 685 327.

Un dispositif à soupape automatique comprend une soupape ayant une tête cylindrique solidaire d'une tige centrale logée de façon à pouvoir effectuer une translation le long de son axe longitudinal dans un tube vissé ou chassé dans une partie latérale de la boîte de la montre. Le tube comporte un épaulement intérieur définissant une portée supérieure et une portée inférieure. L'épaulement intérieur délimite un premier espace supérieur dans lequel est logée la tête de soupape et un deuxième espace inférieur définissant un passage relié à l'intérieur de la boite et dans lequel s'étend une partie de la tige centrale. Un joint d'étanchéité annulaire est disposé autour de la tige centrale entre la tête de soupape et la portée supérieure du tube. La tête est maintenue en appui contre le joint au moyen d'un ressort de rappel entourant la portion de tige logée dans le passage et s'étendant entre la portée inférieure et un écrou vissé sur l'extrémité libre de la tige de soupape. Ainsi, le joint est susceptible de se soulever contre la force de rappel du ressort quand la pression régnant à l'intérieur de la boîte devient plus élevée que celle régnant à l'extérieur. Il s'ensuit l'évacuation du gaz depuis l'intérieur de la montre vers l'extérieur. Un dispositif d'étanchéité d'une couronne de boîte de montre est connu du document CH 472 065.

La fabrication et le montage de ces dispositifs à soupape, vissés ou chassés sur des boites de montre sont bien connus. Toutefois, les procédés de montage de ces dispositifs à soupape sont mal adaptés à ces dispositifs lorsque la soupape porte sur la face d'extrémité de sa tête une inscription ou un motif, par exemple un logo, une marque de fabrique ou un signe analogue. En effet, les procédés de montage connus ne permettent généralement pas d'amener tête de soupape dans une orientation angulaire déterminée précise par rapport à la boîte lors du montage du dispositif à soupape par vissage ou chassage du tube sur la boite de montre. Cela nuit donc à l'esthétique de la montre lorsqu'une inscription est apposée sur la face d'extrémité de la tête de soupape. Cette situation est bien entendu inacceptable lorsque ces dispositifs à soupape équipent des produits de luxe et de haute qualité. Un dispositif de réglage et de fixation d'une couronne de boîte de montre est connu du document EP 2 385 432.

La présente invention a pour but de remédier aux inconvénients de l'art antérieur susmentionné en fournissant un dispositif à soupape vissé ou chassé, en particulier un dispositif à soupape à hélium automatique de construction simple et économique et dont la tête de soupape comporte sur sa face d'extrémité un motif tel qu'un logo ou une marque et dans lequel la position du logo ou de la marque apposée sur la face d'extrémité de ladite tête puisse aisément être ajustée dans une position ou orientation angulaire déterminée précise.

A cet effet, l'invention a pour objet un dispositif à soupape orientable comprenant :
une soupape munie à une extrémité proximale d'une tête de soupape solidaire d'une tige centrale se terminant par une extrémité distale, la face avant de ladite tête comprenant un logo ou une marque,
un tube destiné à être assemblé une boîte de montre par exemple par vissage ou chassage, la tige étant agencée de façon à pouvoir effectuer une translation le long de son axe longitudinal dans ledit tube, le tube comportant un épaulement intérieur définissant une portée supérieure et une portée inférieure et délimitant un premier espace supérieur dans lequel est logée la tête de soupape et un deuxième espace inférieur définissant un passage relié à l'intérieur de la boite de montre et dans lequel s'étend une partie de la tige centrale,
un joint d'étanchéité entourant la tige centrale pour garantir l'étanchéité entre la tige centrale et une paroir intérieure du tube, et de préférence disposé entre la tête de soupape et la portée supérieure du tube,
un ressort de rappel entourant la portion de tige logée dans le passage et s'étendant entre la portée inférieure et un organe d'arrêt prévu à l'extrémité distale de la tige de soupape de manière à maintenir la tête de soupape en appui contre le joint et
un dispositif pour le réglage de l'orientation angulaire de la tête de soupape par rapport à la boite de montre, caractérisé en ce que
ledit dispositif pour le réglage de l'orientation angulaire de la tête de soupape comprend une bague de friction disposée concentriquement, autour de la tige centrale, entre la tête de soupape et l'organe d'arrêt,
en ce que la bague de friction est solidaire en rotation de la tige et libre en translation par rapport à la tige,
en ce que la bague de friction comprend une surface de friction extérieure, par exemple cylindrique, en contact de friction avec une paroi intérieure du tube.
et en ce que ledit dispositif pour le réglage de l'orientation angulaire de la tête de soupape comprend des moyens d'actionnement en rotation de celle-ci permettant de faire pivoter la soupape contre les forces de frottement induites par la bague de friction afin de régler l'orientation angulaire de la tête de soupape, lesdits moyens d'actionnement étant de préférence prévus dans la partie distale de la tige.

Conformément à d'autres aspects avantageux de l'invention :
- les moyens d'actionnement forment également l'organe d'arrêt du ressort de rappel.
- le moyen d'actionnement est un écrou.
- le moyen d'actionnement comprend une fente,
- la fente est agencée dans l'extrémité distale de la tige ou dans l'écrou.
- le couple de friction engendrée par la bague de friction à l'intérieure du tube est supérieur au couple de vissage de l'écrou sur la tige.
- la bague de friction est agencée entre le joint d'étanchéité et la portée supérieure.
- la bague de friction comprend une ouverture de forme polygonale et la tige présente une section polygonale complémentaire à ladite ouverture afin de rendre la tige solidaire en rotation de la bague.
- la bague d'arrêt peut être disposée soit dans le premier espace supérieur soit dans le deuxième espace inférieur

L'invention concerne également une boite de montre comprenant un dispositif à soupape tel que décrit ci-dessus.

D'autres caractéristiques et avantages de la présente invention apparaîtront dans la description suivante d'un mode de réalisation préféré, présenté à titre d'exemple non limitatif en référence aux dessins annexés, dans lesquels:
- la figure 1 montre une vue de dessus d'un dispositif à soupape orientable, pourvue d'un logo sur la face externe la tête de soupape selon l'invention;
- la figure 2 montre une vue en coupe du dispositif à soupape orientable selon l'invention selon la ligne II-II de la figure 1 ;
- la figure 3 montre une section du dispositif à soupape orientable selon l'invention, selon la ligne III- III de la figure 2 ;
- la figure 4 montre une section du dispositif à soupape orientable selon l'invention, selon la ligne IV- IV de la figure 2

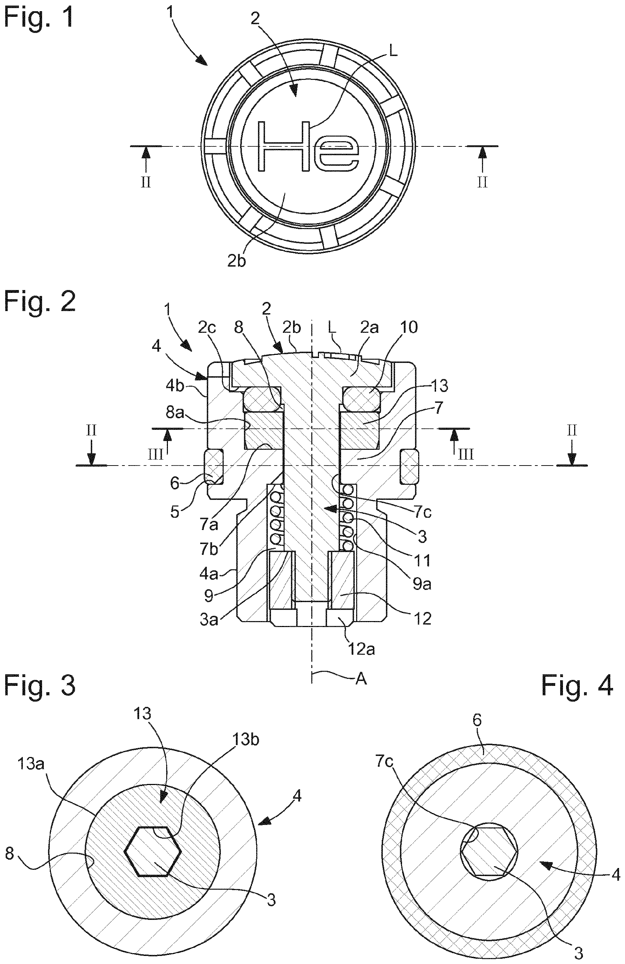

Aux figures 1 et 2, on voit un dispositif à soupape automatique désignée par la référence générale 1 et destinée à être montée par chassage ou vissage dans la paroi latérale d'une carrure de boite de montre (non représentée).

Sur la figure 1, qui est une vue de dessus du dispositif à soupape 1, on peut distinguer le logo L « He », agencé sur la face externe d'une soupape 2, à l'intérieur duquel est logé le dispositif du réglage de l'orientation décrit plus loin à l'aide des figures 2 à 4. Pour des raisons esthétiques, ce logo L est ajusté en position parfaitement horizontale correspondant de préférence au plan de la carrure de la montre sur laquelle est montée la soupape.

Le dispositif à soupape 1 comprend une soupape 2 muni d'une tête de soupape 2a solidaire d'une tige centrale 3. La face avant 2b de la tête 2a comprenant le logo L.

Le dispositif 1 comprend en outre un tube 4 destiné à être chassé par sa partie inférieure 4a dans une ouverture de la carrure d'une boite de montre. Le tube 4 présente une partie supérieure 4b de plus grand diamètre que celui de la partie inférieure 4a. Le tube 4 comprend dans la zone inférieure de sa partie supérieure une gorge annulaire 5 dans laquelle est logé un joint torique 6 assurant son étanchéité au niveau de la carrure.

Selon les modes de réalisation, le tube 4 peut soit être terminé par une portion supérieure émergeante de la carrure soit être noyé dans la carrure.

Le tube 4 comporte épaulement intérieur 7 définissant une portée supérieure 7a et une portée inférieure 7b ainsi qu'une ouverture 7c de diamètre réduit. L'épaulement intérieur 7 délimite également un premier espace supérieur 8 dans lequel est logée la tête de soupape 2 et un deuxième espace inférieur définissant un passage 9 relié à l'intérieur de la boite de montre.

La tige central 3 est agencée à l'intérieur du tube 4 de façon à pouvoir effectuer une translation le long de son axe longitudinal A et à pouvoir tourner librement dans l'ouverture 7c.

Le dispositif comprend en outre un joint d'étanchéité annulaire 10 entourant la tige centrale et disposé en dessous de la tête 2a entre cette dernière et la portée supérieure 7a.

On voit également que le dispositif 1 comprend en outre un ressort hélicoïdal de rappel 11 qui entoure la portion de la centrale de la tige 3 s'étendant ou logée dans le passage 8. Le ressort 11 est monté comprimé entre la portée inférieure 7b et un organe d'arrêt 12, solidaire en translation de la tige central 3 et agencé à l'extrémité distale de la tige centrale 3.

Dans l'exemple illustré l'organe d'arrêt 12 est un écrou vissé sur la partie distale de la tige en butée contre un épaulement 3a de celle-ci. La tête 2a est ainsi maintenue en appui par sa face arrière 2c contre le joint d'étanchéité annulaire 10 grâce au ressort de rappel 11.

Le dispositif comprend en outre un dispositif pour le réglage de l'orientation angulaire de la tête de soupape 2 par rapport à la boite de montre. Le dispositif de réglage comprend une bague de friction 13 disposée entre la tête de soupape 2a et la portée supérieure 7a et dans l'exemple illustré la bague de friction est disposée plus particulièrement entre le joint annulaire 10 et la portée supérieure 7a. La bague de friction 13 présente une surface externe cylindrique 13a dont le diamètre est ajusté serré sur la paroi intérieure 8a de l'espace supérieur 8 du tube 4, donc en contact de friction avec cette paroi 8a.

Il va de soi que dans une variante la bague de friction 13 pourrait être disposée entre le joint annulaire 10 et la face arrière 2c de la tête de soupape ou encore selon une autre variante dans l'espace inférieur 9 par exemple entre l'extrémité supérieure du ressort 11 et la portée inférieure 7b. Dans ce dernier cas, la surface externe cylindrique 13a de la bague de friction 13 présente un diamètre qui est ajusté serré sur la paroi intérieure 9a de l'espace inférieur 9 du tube 4, et est donc en contact de friction avec cette paroi 9a

Comme cela est visible à la figure 3, la bague de friction 13 comprend une ouverture centrale 13b de forme polygonale en l'occurrence hexagonale et la tige centrale 3 présente une section polygonale complémentaire à l'ouverture 13b afin de rendre la tige 3 solidaire en rotation de la bague 13 tout en permettant à la tige de conserver un libre mouvement de translation dans l'ouverture 13b.

On notera que l'écrou 12 comprend dans sa face distale une fente 12a destinée à venir coopérer avec l'extrémité d'un outil pour être vissé sur la partie distale de la tige en butée sur l'épaulement 3a. Une fois en butée contre l'épaulement 3a, et comme l'ajustement à friction de la bague de friction 13 sur la paroi intérieure 8a de l'espace supérieur 8 est choisi pour que le couple de friction engendré par la bague de friction à l'intérieur du tube soit supérieur au couple de vissage de l'écrou 12 sur la tige centrale 3. L'écrou 12 agit donc comme moyen d'actionnement en rotation de la soupape 2 ce qui permet de la faire pivoter et par là même de pouvoir régler l'orientation angulaire de la tête de soupape 2 dans une position angulaire déterminée. On notera à ce propos que la surface de la paroi intérieure 8a et/ou la surface externe cylindrique 13a de la bague peuvent être texturées pour ajuster le couple de friction approprié.

On remarquera que dans ce mode de réalisation, l'écrou 12 a une double fonction à savoir qu'il forme, d'une part, l'organe d'arrêt du ressort de rappel 11 et d'autre part, les moyens d'actionnement de la soupape 2 pour la faire pivoter et l'orienter angulairement. Toutefois dans des variantes de réalisation non représentées on pourrait envisager sans sortir du cadre de l'invention de prévoir par exemple un anneau élastique inséré dans une gorge annulaire de la partie distale de la tige centrale 3 comme organe d'arrêt et une fente agencée directement dans la face de l'extrémité distale de la tige centrale 3 comme moyen d'actionnement de la soupape.

Le procédé de montage du dispositif à soupape et d'orientation de la soupape est le suivant. Le dispositif à soupape 1 entièrement assemblé avec l'écrou 12 vissé en butée contre l'épaulement 3a de la tige est chassé ou vissé dans une ouverture de la carrure de la boite de montre. Une fois chassé ou vissé, le tube 4 ainsi immobilisé dans la carrure, l'écrou 12 peut alors être vissé par l'intermédiaire d'un outil inséré dans la fente 12a depuis l'intérieur de la carrure et entrainer la tête de soupape en rotation. Ce faisant, la tête de soupape entraine à son tour la bague de friction 13 via la liaison par section polygonale entre l'ouverture 13a et la section de la tige centrale 3 dans l'orientation angulaire désirée. La bague 13 tourne dans le tube 4 contre le couple de frottement de retenu présent entre la surface extérieure 13a de la bague de friction 13 et la paroi intérieure 8a de l'espace supérieur du tube qui est plus faible que le couple appliqué par l'outil sur l'écrou lorsque l'écrou 12 en butée contre l'épaulement 3a.

Selon une variante de réalisation, on peut envisager que les moyens d'actionnement en rotation soient prévus dans la partie proximale de la soupape et en particulier on pourrait prévoir par exemple que la face avant 2b de la tête 2a de la soupape comprennent des logements pour recevoir les extrémités d'un outil de manœuvre. Alternativement on pourrait envisager que la tête de soupape fasse légèrement saillie par rapport à la face d'extrémité extérieure du tube et présente une surface latérale non circulaire par exemple hexagonale afin de pouvoir être saisie par un outil approprié.

## Revendications

1. Dispositif à soupape orientable comprenant.
une soupape(2) munie à une extrémité proximale d'une tête de soupape (2a) solidaire d'une tige centrale (3) se terminant par une extrémité distale, la face avant de ladite tête comprenant un logo ou une marque (L),
un tube (4) destiné à être assemblé à une boîte de montre, la tige étant agencée de façon à pouvoir effectuer une translation le long de son axe longitudinal dans ledit tube, le tube (4) comportant un épaulement (7) intérieur définissant une portée supérieure (7a) et une portée inférieure (7b) et délimitant un premier espace supérieur (8) dans lequel est logée la tête de soupape et un deuxième espace inférieur définissant un passage (9) relié à l'intérieur de la boite de montre et dans lequel s'étend une partie de la tige centrale (3),
un joint d'étanchéité (10) entourant la tige centrale pour garantir l'étanchéité entre la tige et une paroi intérieure du tube,
un ressort de rappel (11) entourant la portion de tige logée dans le passage et s'étendant entre la portée inférieure (7b) et un organe d'arrêt prévu à l'extrémité distale de la tige de soupape de manière à maintenir la tête de soupape en appui contre le joint (10) et
un dispositif pour le réglage de l'orientation angulaire de la tête de soupape (2a) par rapport à la boite de montre, **caractérisé en ce que**
ledit dispositif pour le réglage de l'orientation angulaire de la tête de soupape (2a) comprend une bague de friction (13) disposée concentriquement autour de la tige centrale (3) entre la tête de soupape et l'organe d'arrêt,
**en ce que** la bague de friction (13) est solidaire en rotation de la tige et libre en translation par rapport à la tige (3),
**en ce que** la bague de friction (13) comprend une surface de friction extérieure (13a) en contact de friction avec une paroi intérieure (8a ; 9a) du tube (4),
et **en ce que** ledit dispositif de réglage de l'orientation angulaire de la tête de soupape (2a) comprend des moyens d'actionnement en rotation (12) de celle-ci permettant de faire pivoter la soupape contre les forces de frottement induites par la bague de friction (13) afin de régler l'orientation angulaire de la tête de soupape.

2. Dispositif à soupape selon la revendication 1, **caractérisé en ce que** les moyens d'actionnement (12) sont agencés dans la partie distale de la tige centrale

3. Dispositif à soupape selon la revendication 2, **caractérisé en ce que** les moyens d'actionnement forment également l'organe d'arrêt du ressort de rappel.

4. Dispositif à soupape selon la revendication 2 ou 3, **caractérisé en ce que** le moyen d'actionnement est un écrou (12).

5. Dispositif à soupape selon la revendication 1 à 4, **caractérisé en ce que** le moyen d'actionnement comprend une fente (12a).

6. Dispositif à soupape selon la revendication 5, **caractérisé en ce que** la fente est agencée dans l'extrémité distale de la tige ou dans l'écrou (12).

7. Dispositif à soupape selon la revendication 4 ou l'une des revendications 5 ou 6 quand ces dernières dépendent de la revendication 4, **caractérisé en ce que** le couple de friction engendré par la bague de friction (13) à l'intérieure du tube (4) est supérieur au couple de vissage de l'écrou (12) sur la tige (3).

8. Dispositif à soupape selon l'une des revendications précédentes **caractérisé en ce que** la bague de friction (13) est agencée entre le joint d'étanchéité (10) et la portée supérieure (7a).

9. Dispositif à soupape selon l'une des revendications précédentes **caractérisé en ce que** la bague de friction (13) comprend une ouverture de forme polygonale et **en ce que** la tige présente une section polygonale complémentaire à ladite ouverture afin de rendre la tige solidaire en rotation de la bague.

10. Dispositif à soupape selon l'une des revendications précédentes **caractérisé en ce que** la bague de friction (13) est disposée dans ledit premier espace supérieur (8).

11. Dispositif à soupape selon l'une des revendications 1 à 9, **caractérisé en ce que** la bague de friction (13) est disposée dans ledit deuxième espace inférieur.

12. Dispositif à soupape selon l'une des revendications précédentes **caractérisé en ce que** le joint d'étanchéité (10) est disposé entre la tête de soupape (2a) et la portée supérieure (7a) du tube (4).

13. Boite de montre comprenant un dispositif à soupape selon l'une quelconque des revendications 1 à 10.

## Patentansprüche

1. Vorrichtung mit ausrichtbarem Ventil, umfassend:
ein Ventil (2), das an einem proximalen Ende mit einem Ventilkopf (2a) versehen ist, der mit einer zentralen Welle (3) fest verbunden ist, das in einem distalen Ende endet, wobei die vordere Fläche des Kopfs ein Logo oder eine Markierung (L) umfasst,
ein Rohr (4), das zur Verbindung mit einem Uhrengehäuse bestimmt ist, wobei die Welle derart eingerichtet ist, dass sie eine Translation entlang ihrer Längsachse in dem Rohr durchführen kann, wobei das Rohr (4) einen inneren Ansatz (7) aufweist, der eine obere Auflagefläche (7a) und eine untere Auflagefläche (7b) definiert und einen ersten oberen Raum (8) begrenzt, in dem der Ventilkopf untergebracht ist, und einen zweiten unteren Raum, der einen Durchgang (9) definiert, der mit dem Inneren des Uhrengehäuses verbunden ist und in welchem sich ein Teil der zentralen Welle (3) erstreckt,
eine Dichtung (10), die die zentrale Welle umgibt, um die Dichtigkeit zwischen der Welle und einer Innenwand des Rohrs zu garantieren,
eine Rückstellfeder (11), die den Wellenabschnitt umgibt, der in dem Durchgang untergebracht ist und sich zwischen der unteren Auflagefläche (7b) und einem Sperrorgan erstreckt, das am distalen Ende der Ventilwelle derart vorgesehen ist, dass der Ventilkopf in Abstützung auf der Dichtung (10) gehalten wird, und
eine Vorrichtung zur Einstellung der Winkelausrichtung des Ventilkopfs (2a) in Bezug auf das Uhrengehäuse, **dadurch gekennzeichnet,**
**dass** die Vorrichtung zur Einstellung der Winkelausrichtung des Ventilkopfs (2a) einen Reibring (13) umfasst, der um die zentrale Welle (3) zwischen dem Ventilkopf und dem Sperrorgan konzentrisch angeordnet ist,
**dass** der Reibring (13) mit der Welle rotatorisch fest verbunden ist und translatorisch in Bezug auf die Welle (3) frei ist,
**dass** der Reibring (13) eine äußere Reibfläche (13a) in Reibkontakt mit einer Innenwand (8a; 9a) des Rohrs (4) umfasst,
und **dass** die Vorrichtung zur Einstellung der Winkelausrichtung des Ventilkopfs (2a) Rotationsbetätigungsmittel (12) derselben umfasst, die erlauben, das Ventil entgegen den von dem Reibring (13) induzierten Reibungskräften zu drehen, um die Winkelausrichtung des Ventilkopfs zu einzustellen.

2. Ventilvorrichtung nach Anspruch 1, **dadurch gekennzeichnet, dass** die Betätigungsmittel (12) im distalen Teil der zentralen Welle eingerichtet sind.

3. Ventilvorrichtung nach Anspruch 2, **dadurch gekennzeichnet, dass** die Betätigungsmittel ebenfalls das Sperrorgan der Rückstellfeder bilden.

4. Ventilvorrichtung nach Anspruch 2 oder 3, **dadurch gekennzeichnet, dass** das Betätigungsmittel eine Mutter (12) ist.

5. Ventilvorrichtung nach Anspruch 1 bis 4, **dadurch gekennzeichnet, dass** das Betätigungsmittel einen Spalt (12a) umfasst.

6. Ventilvorrichtung nach Anspruch 5, **dadurch gekennzeichnet, dass** der Spalt im distalen Ende der Welle oder in der Mutter (12) eingerichtet ist.

7. Ventilvorrichtung nach Anspruch 4 oder einem der Ansprüche 5 oder 6, wenn diese von Anspruch 4 abhängen, **dadurch gekennzeichnet, dass** das von dem Reibring (13) im Inneren des Rohrs (4) erzeugte Reibkraftmoment größer als das Schraubkraftmoment der Mutter (12) auf der Welle (3) ist.

8. Ventilvorrichtung nach einem der vorangehenden Ansprüche, **dadurch gekennzeichnet, dass** der Reibring (13) zwischen der Dichtung (10) und der oberen Auflagefläche (7a) eingerichtet ist.

9. Ventilvorrichtung nach einem der vorangehenden Ansprüche, **dadurch gekennzeichnet, dass** der Reibring (13) eine polygonal geformte Öffnung umfasst und dass die Welle einen polygonalen Querschnitt aufweist, der zu der Öffnung komplementär ist, um die Welle mit dem Ring rotatorisch fest zu verbinden.

10. Ventilvorrichtung nach einem der vorangehenden Ansprüche, **dadurch gekennzeichnet, dass** der Reibring (13) im oberen ersten Raum (8) angeordnet ist.

11. Ventilvorrichtung nach einem der Ansprüche 1 bis 9, **dadurch gekennzeichnet, dass** der Reibring (13) im unteren zweiten Raum angeordnet ist.

12. Ventilvorrichtung nach einem der vorangehenden Ansprüche, **dadurch gekennzeichnet, dass** die Dichtung (10) zwischen dem Ventilkopf (2a) und der oberen Auflagefläche (7a) des Rohrs (4) angeordnet ist.

13. Uhrengehäuse, umfassend eine Ventilvorrichtung nach einem der Ansprüche 1 bis 10.

## Claims

1. Orientable valve device including:
a valve (2) provided at a proximal end with a valve head (2a) integral with a central shaft (3) terminating in a distal end, the front face of said head comprising a logo or a trademark (L),
a tube (4) intended to be assembled to a watch case, the shaft being arranged to be able to move in translation along its longitudinal axis in said tube, the tube (4) comprising an inner shoulder (7) defining an upper step (7a) and a lower step (7b) and delimiting a first upper space (8) inside which is housed the valve head and a second lower space defining a passage (9) connected to the interior of the watch case and into which extends one portion of the central shaft (3),
a sealing gasket (10) surrounding the central shaft to ensure the seal between the shaft and an internal wall of the tube,
a return spring (11) surrounding the shaft portion housed inside the passage and extending between the lower step (7b) and a stop member arranged at the distal end of the valve shaft so as to hold the valve head in abutment against the gasket (10), and
a device for adjusting the angular orientation of the valve head (2a) with respect to the watch case, **characterized in that**
said device for adjusting the angular orientation of the valve head (2a) includes a friction ring (13) arranged concentrically around the central shaft (3), between the valve head and the stop member,
**in that** the friction ring (13) rotates integrally with the shaft and is free in translation with respect to the shaft (3),
**in that** the friction ring (13) includes an external friction surface (13a) in friction contact with an internal wall (8a ; 9a) of the tube (4),
and **in that** said device for adjusting the angular orientation of the valve head (2a) includes means for rotational actuation (12) of the latter making it possible to pivot the valve against the frictional forces generated by the friction ring (13) in order to adjust the angular orientation of the valve head.

2. Valve device according to claim 1, **characterized in that** the actuating means (12) are arranged in the distal portion of the central shaft.

3. Valve device according to claim 2, **characterized in that** the actuating means also form the stop member for the return spring.

4. Valve device according to claim 2 or 3, **characterized in that** the actuating means is a nut (12).

5. Valve device according to claims 1 to 4, **characterized in that** the actuating means includes a slot (12a).

6. Valve device according to claim 5, **characterized in that** the slot is arranged in the distal end of the shaft or in the nut (12).

7. Valve device according to claim 4 or any of claims 5 or 6 when the latter depend on claim 4, **characterized in that** the friction torque generated by the friction ring (13) inside the tube (4) is greater than the screw torque of the nut (12) on the shaft (3).

8. Valve device according to any of the preceding claims, **characterized in that** the friction ring (13) is arranged between the sealing gasket (10) and the upper step (7a).

9. Valve device according to any of the preceding claims, **characterized in that** the friction ring (13) includes an opening of polygonal shape and **in that** the shaft has a polygonal cross section complementary to said opening to make the shaft integral in rotation with the ring.

10. Valve device according to any of the preceding claims, **characterized in that** the friction ring (13) is disposed in said first upper space (8).

11. Valve device according to any of claims 1 to 9, **characterized in that** the friction ring (13) is disposed in said second lower space.

12. Valve device according to any of the preceding claims, **characterized in that** the sealing gasket (10) is arranged between the valve head (2a) and the upper step (7a) of the tube (4).

13. Watch case comprising a valve device according to any of claims 1 to 10.
